Europäisches Patentamt

European Patent Office

Office européen des brevets

(11) Publication number: **0 163 741**
**B1**

(12) EUROPEAN PATENT SPECIFICATION

(45) Date of publication of patent specification: **19.07.89**

(51) Int. Cl.⁴: **H 04 N 9/24, H 01 J 31/20, H 01 J 29/34**

(21) Application number: **84904166.0**

(22) Date of filing: **12.11.84**

(86) International application number:
**PCT/JP84/00542**

(87) International publication number:
**WO 85/02313 23.05.85 Gazette 85/12**

(54) BEAM-INDEXING COLOR CATHODE-RAY TUBE.

(30) Priority: **11.11.83 JP 212181/83**

(43) Date of publication of application:
**11.12.85 Bulletin 85/50**

(45) Publication of the grant of the patent:
**19.07.89 Bulletin 89/29**

(84) Designated Contracting States:
**DE FR GB**

(56) References cited:
**DE-B-1 136 368**
**JP-A-59 049 087**
**JP-B-48 014 856**

**TOUTE L'ELECTRONIQUE, no. 450, January 1980, page 10, Paris, FR; "Tube télévision extra-plat"**

(73) Proprietor: **SONY CORPORATION**
**7-35 Kitashinagawa 6-Chome Shinagawa-ku Tokyo 141 (JP)**

(72) Inventor: **NATORI, Takehisa Sony Corporation**
**7-35, Kitashinagawa 6-chome**
**Shinagawa-ku Tokyo 141 (JP)**
Inventor: **SATO, Hiroki Sony Corporation**
**7-35, Kitashinagawa 6-chome**
**Shinagawa-ku Tokyo 141 (JP)**
Inventor: **HATANAKA, Masato Sony Corporation**
**7-35, Kitashinagawa 6-chome**
**Shinagawa-ku Tokyo 141 (JP)**

(74) Representative: **Thomas, Christopher Hugo et al**
**D Young & Co 10 Staple Inn**
**London WC1V 7RD (GB)**

Description

This invention relates to a beam index type colour cathode ray tube.

A black and white cathode ray tube is known in whicb a phosphor screen is formed on a panel of a tube envelope, the phosphor screen is scanned by a single electron beam emitted from an electron gun, and a picture formed on the phosphor screen is viewed from tbe side on which the electron beam impinges. Since this cathode ray tube can be made flat, it is very suitable for use in a small-sized television receiver. Because the picture is viewed from the side on which the electron beam impinges, a colour selecting electrode such as a shadow mask or aperture grille cannot be used, and it is preferable for the cathode ray tube to be of beam index type.

Beam index type colour cathode ray tubes are classified into two systems by the difference between the arrangement of a phosphor stripe and an index stripe in the scanning direction of the electron beam. In the first system, the phosphor stripe and the index stripe are aligned in the same direction as the electron beam scanning direction, while in the second system, they are aligned in the direction perpendicular to the electron beam scanning direction.

The first system has the advantage of high resolution, but the time division frequency for use in time division-modulating the electron beam by the respective primary colour signals is high. The second system is low in resolution, but has the advantage that the time division frequency is low.

Beam index type colour cathode ray tubes can also be classified into two types by the form of the index stripe, which may be a phosphor stripe or an electrode stripe.

With the index phosphor stripe, it is required to provide a plurality of photodetectors outside the tube envelope to detect the light emitted from the index phosphor stripe, so that the arrangement becomes complicated and the precision in detecting the electron beam landing position is low. Moreover, it is difficult to match the relative positions of each colour phosphor stripe and index phosphor stripe.

With the index electrode stripe, the photodetectors are not required, and thus the arrangement is simplified. Moreover, the accuracy in the detection of the electrode landing position is high, and it is not so difficult to match the relative positions of the respective colour phosphor stripes and the index electrode stripe. Where a picture formed on the phosphor screen is viewed from the side opposite to the side on which the electron beam impinges, an electrostatic capacity between the index electrode stripe and the metal back film becomes a serious problem, because the magnitude of an electron landing position detecting signal from the index electrode stripe is lowered. Furthermore, the index electrode stripe and the metal back film are difficult to produce. To separate the index electrode from the metal back film, the index electrode must be formed on an insulating material on the metal back film, or a carbon layer must be provided for preventing a colour blur from being produced between the phosphor stripes. Thus, it is difficult to make the side edge of the index electrode stripe sharp.

German patent specification DE—B—1 136 368 discloses a cathode ray tube having the feature of the precharacterizing part of claim 1 below.

According to the present invention there is provided a beam index type colour cathode ray tube comprising:

a phosphor screen formed on a panel of a tube envelope, said phosphor screen being scanned by a single electron beam from an electron gun, and said phosphor screen being formed of a plurality of colour phosphor stripes which extend in a line scanning direction of said electron beam and being sequentially arranged in the direction perpendicular to the line scanning direction, and first and second light absorbing index electrode stripes formed on said panel so as to be alternately arranged between adjacent said phosphor stripes whereby said first and second index electrode stripes on respective sides of each said phosphor stripe are scanned by said electron beam simultaneously with said phosphor stripe; and

auxiliary vertical deflecting means;

characterized in that: a picture formed on said phosphor screen is viewed from the side on which said electron beam is incident; and in that:

a difference signal between first and second electron beam landing position detecting signals derived from said first and second index electrode stripes is derived by an amplifier circuit comprising a differential amplifier and is supplied to said auxiliary vertical deflecting means as a vertical correction deflecting signal, so that scanning tracking of said electron beam relative to said phosphor stripes is controlled by said auxiliary vertical deflecting means.

The invention will now be described by way of example with reference to the accompanying drawings, throughout which like parts are referred to by like references, and in which:

Figure 1 is a side cross-sectional view of an embodiment of colour cathode ray tube according to the present invention.

Figure 2 is a plan cross-sectional view of the cathode ray tube of Figure 1 from which an upper panel has been removed, and a circuit diagram showing a peripheral circuit thereof;

Figures 3 and 4 are respectively a plan view and a cross-sectional view showing the phosphor screen of the cathode ray tube of Figure 1; and

Figures 5A to 5J are respective cross-sectional views illustrating manufacturing processes of a method for making the phosphor screen of the cathode ray tube of Figure 1.

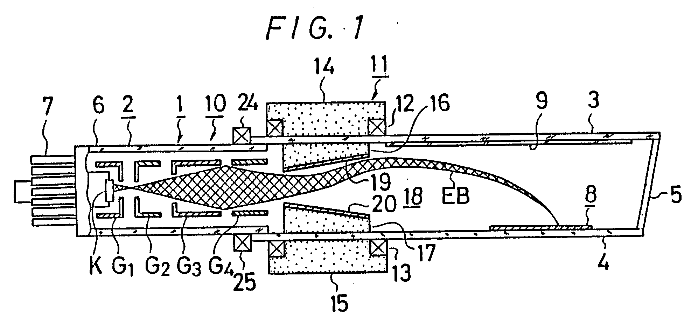

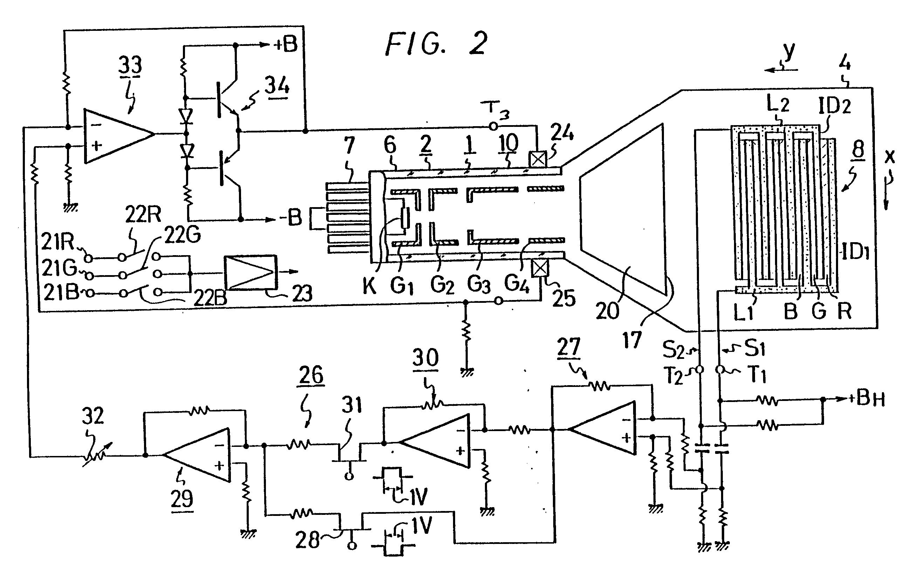

Referring to Figures 1 and 2, a beam index type colour cathode ray tube 1 made as a flat tube comprises a glass tube envelope 2 which comprises an upper panel 3 and a lower panel 4 parallel thereto, a side plate 5 between the panels 3 and 4, and a neck portion 6 with a pin 7 formed on the free end thereof. A phosphor screen 8 is formed on the iner surface of the lower panel 4, and a transparent electrode 9 is formed on the inner surface of the upper panel 3 opposing the phosphor screen 8.

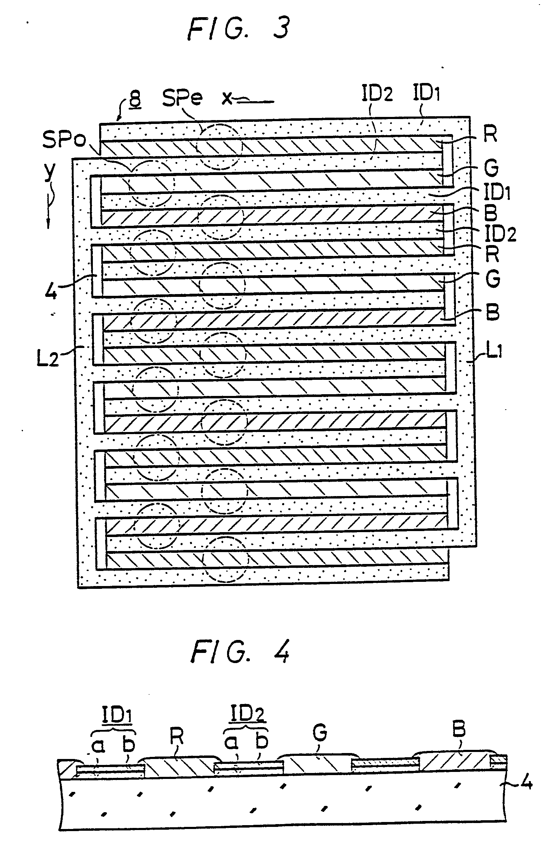

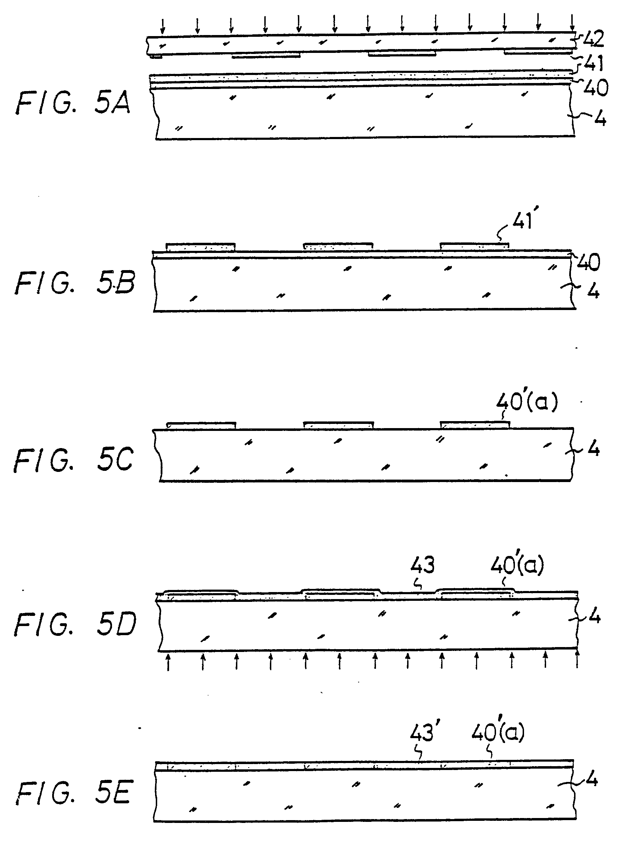

As will be clear from Figures 3 and 4, the phosphor screen 8 is formed of primary colour phosphors, or red, green and blue phosphors R, G and B which are formed on the inner surface of the lower panel 4 so as to extend in the line scanning direction x of a single electron beam EB, and are arranged repeatedly in turn in the field scanning direction y perpendicular to the line scanning direction x. First and second index electrode stripes ID1 and ID2 which have light absorbing properties and are insulated from one another, are formed on the inner surface of the lower panel 4 so as to be arranged alternately between the adjacent phosphor stripes R, G and B. The index stripe electrodes ID1 and ID2 are also arranged outside the end phosphor stripes in the direction y.

As shown in Figure 4, the first and second index electrode stripes ID1 and ID2 are of a double layer structure which comprises an aluminium conductive stripe a formed on the inner surface of the lower panel 4 and a light absorbing stripe b made of carbon formed thereon to prevent colour blur. Coupling electrodes L1 and L2 connect all the first and all the second index stripes ID1 and ID2, respectively. It is possible to form a light absorbing stripe by oxidizing the surface of the conductive stripe a made of aluminium.

The single electron beam EB simultaneously scans, as shown in Figure 3, the phosphor stripe R, G or B and the first and second index electrode stripes ID1 and ID2 formed at each side of the phosphor stripes R, G and B. Electron beam spots SPe and SPo are formed in the scanning of even and odd fields respectively. It is assumed that upon scanning even fields, the electron beam EB scans the phosphor stripes R, B, G, R, B, . . . sequentially, while in the odd fields it scans the phosphor stripes G, R, B, G, R, B, . . . sequentially, so an interlaced scanning is carried out. The number of phosphor stripes may be about 483 to form an effective picture screen.

A voltage of, for example, 8.4 kV is applied to the first and second index electrodes ID1 and ID2 and a voltage of, for example, 5.0 kV is applied to the opposing electrode 9 thereby to deflect (secondary deflection) the electron beam EB emitted from an electron gun 10 housed in the neck portion 6, so that the electron beam EB is made incident on the phosphor screen 8.

The electron gun 10 comprises a cathode K, a first grid G1, a second grid G2, a third grid (focusing electrode) G3 and a fourth grid G4. The third and fourth grids G3 and G4 constitute a main lens, and carry out the dynamic focusing of the electron beam EB.

A horizontal deflection yoke 11 comprises upper and lower ferrite cores 14 and 15 on which horizontal deflection coils 12 and 13 are respectively wound, and which are located outside the neck portion 6, and upper and lower ferrite magnetic poles 16 and 17 which are respectively mounted inside the neck portion 6.

A vertical deflection plate 18 is formed of opposing electrode plates 19 and 20 which are respectively coated on the above magnetic poles 16 and 17.

The electron beam EB is horizontally deflected by the horizontal deflection yoke 11 and is deflected vertically by the vertical deflection plate 18. These are primary deflections. Thereafter, it is secondarily deflected by the first and second index stripes ID1 and ID2 and the opposing electrode 9 so as to scan the respective primary colour phosphor stripes R, G and B of the phosphor screen 8 in the interlaced scanning fashion as described above.

Red, green and blue signals supplied through red, green and blue signal input terminals 21R, 21G and 21B are respectively supplied to an amplifier 23 through on-off switches 22R, 22G and 22B, one of which is turned on at every horizontal cycle. Then, the line sequential signal of red, blue, green, red, blue, green, . . . from the amplifier 23 is supplied to the cathode K (or the first grid G1) of the electron gun 10.

A pair of auxiliary vertical deflection coils 24 and 25 are connected with each other to control the scanning tracking of the electron beam EB for the respective phosphor stripes R, G and B. The auxiliary vertical deflection coils 24 and 25 are located on the outer periphery of the neck portion 6, and nearer to the electron gun 10 than the vertical deflection plate 18. It is possible for the function of the auxiliary vertical deflection coils 24 and 25 to be carried out by the vertical deflection plate 18, or they may be replaced by an auxiliary electrostatic deflection plate.

Next, a circuit 26 which is supplied with the differential signal of first and second electron beam landing position detecting signals S1 and S2 from the first and second index electrode stripes ID1 and ID2, thereby to produce a vertical correcting deflection signal which is to be supplied to the auxiliary vertical deflection coils 24 and 25, will be described.

Terminals T1 and T2 are led out from the first and second index electrode stripes ID1 and ID2 through the coupling electrodes L1 and L2. The terminals T1 and T2 are supplied with the high voltage of 8.4 kV from a power source +BH through resistors. Also, the first and second electron beam landing position detecting signals (ac components) S1 and S2 derived from the terminals T1 and T2 are supplied through capacitors to a differential amplifier 27 which operates as a subtractor. The differential output from the differential amplifier 27 is supplied through a semiconductor switch 28 formed of a field effect transistor (FET) to an amplifier 29 and also through a series circuit of an inverting amplifier 30 and a semiconductor switch 31 formed of an FET to the amplifier 29. The semiconductor switches 28 and 31 are alternately turned on and off at every vertical period, in synchronism with

the vertical synchronizing signal. The output from the amplifier 29 is supplied through a level adjuster 32 to a driving amplifier 33. The amplifiers 27, 29, 30 and 33 are operational amplifiers. The output from the driving amplifier 33 is supplied to an output amplifier 34 which is formed of a single-ended push-pull (SEPP) circuit. A vertical correcting deflection signal produced at an output terminal T3 thereof is supplied to one terminal of the auxiliary vertical deflection coil 24, and the other end of the auxiliary vertical deflection coil 25 is earthed through a resistor.

The operation will now be described. The electron beam, EB scans the respective phosphor stripes R, G or B of the the phosphor screen 8, together when the first and second index electrode stripes ID1 and ID2. When the electron beam EB strikes the first and second index electrode stripes ID1 and ID2, the dc components thereof flow to the cathode K, and only the ac components thereof are derived and fed to the differential amplifier 27. Then, if the scanning position is displaced from the centre thereof to either of the positive and negative directions in the direction y, the differential amplifier 27 produces either a positive output or negative output in response thereof. This output is supplied to the auxiliary vertical deflection coils 24 and 25, and the vertical scanning position of the electron beam EB is controlled by its auxiliary vertical deflecting magnetic field, so that the electron beam EB scans the centre of the phosphor stripes R, G or B. The semiconductor switches 28 and 31 are turned on and off, thereby to change over the polarity of the vertical correcting deflection signal which is supplied to the auxiliary vertical deflecting coils 24 and 25 in the scanning of an odd or even field.

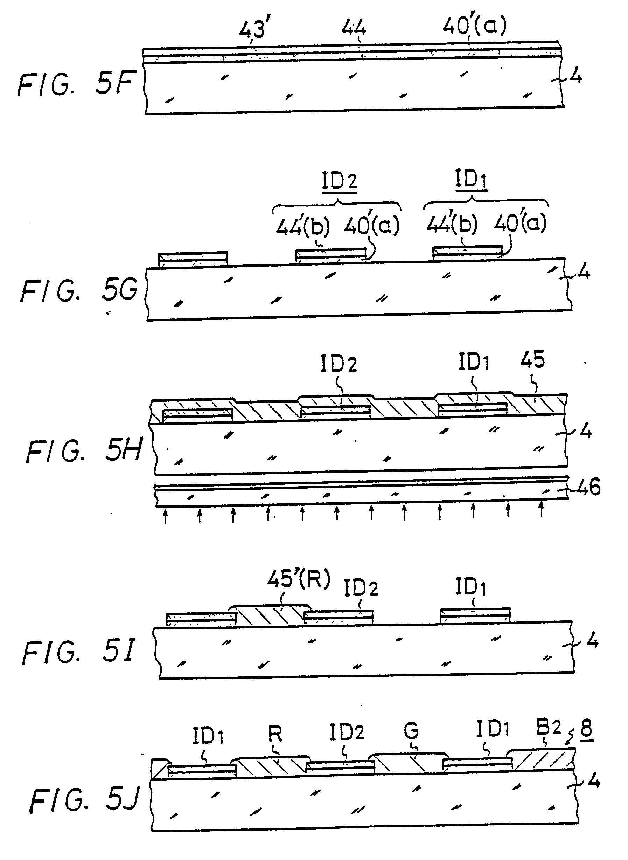

Referring to Figures 5A to 5J, a manufacturing method for producing the phosphor screen 8 will be described in the order of manufacturing steps. A conductive layer 40 is formed on the whole surface of the lower panel 4 by vacuum evaporation of aluminium. Then, a first photosensitive resinous layer 41 is deposited on the whole surface of the conductive layer 40, and ultraviolet rays are made incident on the photosensitive layer 41 through a mask 42 whereby the photosensitive layer 41 is partially cured (Figure 5A).

When the non-cured portion of the photosensitive layer 41 is removed by development, a cured portion 41' is left on the conductive layer 40 (Figure 5B).

Using the cured portion 41' of the photosensitive layer 41 as an etching mask, the conductive layer 40 is etched away, and the cured portion 41' of the photosensitive layer 41 remaining on the non-removed portion 40' of the conductive layer 40 is then removed, so a conductive strip 40'(a) corresponding to the first and second index electrode stripes ID1 and ID2 and both the coupling electrodes L1 and L2 is formed on the lower panel 4 (Figure 5C).

A second photosensitive resinous layer 43 is deposited on the whole surface of the lower panel 4, and the conductive stripe 40'(a), and by using the conductive stripe 40'(a) itself as a mask, ultraviolet rays are made incident on the photosensitive layer 43 from the rear of the lower panel 4 partially to cure the photosensitive layer 43 (Figure 5D).

The non-cured portion of the photosensitive layer 43 formed on the conductive stripe 40'(a) is removed by development, by which a cured portion 43' is left between the adjacent conductive stripes 40'(a) (Figure 5E).

A carbon layer 44 is coated on the whole surface of the conductive stripe 40'(a), and the cured portion 43' of the photosensitive layer 43 (Figure 5F).

When the cured portion 43' of the photosensitive layer 43 and the carbon layer 44 formed thereon are removed by a reversal development process, the first and second index electrode stripes ID1 and ID2 each of which is made of the conductive stripe 40'(a) and the carbon stripe 44'(b) thereon, and the coupling electrodes L1 and L2 (not shown) are respectively formed (Figure 5G).

On the whole surface of the lower panel 4 and the first and second index electrode stripes ID1 and ID2 (although the coupling electrodes, L1 and L2 are included, they will not be described in the explanation below), there is formed, for example, a red phosphor layer 45 containing photosensitive resin (Figure 5H). By using a mask 46, the ultraviolet rays are made incident on the red phosphor layer 45 from the underside of the lower panel 4 to cure a portion of the red phosphor layer 45 between the first and second index electrode stripes ID1 and ID2 which is to form, for example, the red phosphor stripe. Then, the non-cured portion is removed by development thereby to form a red phosphor stripe 45'(R) between the first and second index electrode stripes ID1 and ID2 (Figure 5I).

By repeating similar processes in turn, it becomes possible to form the phosphor screen 8 in which the red, green and blue phosphor stripes R, G and B are repeatedly arranged in turn between the adjacent first and second index electrode stripes ID1 and ID2 on the lower panel 4 (Figure 5J).

This beam index type colour cathode ray tube has the following advantages. Since the first and second index electrode stripes ID1 and ID2 having light absorbing properties are respectively provided between the adjoining phosphor stripes R, G and B, it is free of colour blur. Since the phosphor stripes R, G and B and the first and second index electrode stripes ID1 and ID2 are provided in the direction perpendicular to the electron beam scanning direction, the cathode ray tube is simplified in construction, and the time division frequency for use in time division-modulating the single electron beam becomes low. Since the first and second index electrode stripes ID1 and ID2 are formed at both sides of each of the phosphor stripes R, G and B, the single electron beam scans three of them simultaneously, thereby to produce the first and second electron beam landing position detecting signals, and the difference signal therebetween is used as the vertical correction deflecting signal, the electron beam landing position detecting signal is high in accuracy. Since no metal back film is used for the phosphor screen 8, the first and second electron beam landing position detecting signals from the first and second index electrode stripes ID1 and ID2 are sufficient. Since the carbon layer b on the first and second index electrode stripes ID1 and ID2 is formed by using the conductive layer a therebeneath as the mask, the carbon layer b is formed easily with high positioning accuracy relative to the conductive layer a, and the positioning is made easy. Since the phosphor stripes R, G and B are formed by using the first and second index electrode stripes ID1 and ID2 as the mask, the edges of the phosphor stripes R, G and B can be made sharp, the relative positioning can be achieved with ease, and in addition, the mask for selecting the phosphor stripes R, G and B can be formed roughly. Furthermore, since the exposure for use in forming the phosphor stripes R, G and B containing the photosensitive resin is carried out from the rear of the lower panel 4, it becomes possible to increase the strength for bonding the phosphor stripes R, G and B to the lower panel.

## Claim

A beam index type colour cathode ray tube comprising:
a phosphor screen (8) formed on a panel (4) of a tube envelope (2), said phosphor screen (8) being scanned by a single electron beam (EB) from an electron gun (10), and said phosphor screen (8) being formed of a plurality of colour phosphor stripes (R, G, B) which extend in a line scanning direction (y) of said electron beam (EB) and being sequentially arranged in the direction (x) perpendicular to the line scanning direction (y), and first and second light absorbing index electrode stripes (ID1, ID2) formed on said panel (4) so as to be alternately arranged between adjacent said phosphor stripes (R, G, B) whereby said first and second index electrode stripes (ID1, ID2) on respective sides of each said phosphor stripe (R, G, B) are scanned by said electron beam (EB) simultaneously with said phosphor stripe (R, G, B); and
auxiliary vertical deflecting means (24, 25); characterized in that:
a picture formed on said phosphor screen (B) is viewed from the side on which said electron beam (EB) is incident; and in that:
a difference signal between first and second electron beam landing position detecting signals derived from said first and second index electrode stripes (ID1, ID2) is derived by an amplifier circuit (26) comprising a differential amplifier (27) and is supplied to said auxiliary vertical deflecting means (24, 25) as a vertical correction deflecting signal, so that scanning tracking of said electron beam (EB) relative to said phosphor stripes (R, G, B) is controlled by said auxiliary vertical deflecting means (24, 25).

## Patentanspruch

Farbkathodenstrahlröhre mit Strahlindizierung
mit einem auf einer Scheibe (4) eines Röhrenkolbens (2) ausgebildeten Leuchtstoffschirm (8), der von einem einzigen, aus einer Elektronenkanone (10) kommenden Elektronenstrahl (EB) abgetastet wird und der (8) aus mehreren von Farbleuchtstoffstreifen (R, G, B) gebildet ist, die in Zeilenabtastrichtung (y) des Elektronenstrahls (EB) verlaufen und aufeinanderfolgend in der zur Zeilenabtastrichtung (y) senkrechten Richtung (x) angeordnet sind,
mit ersten und zweiten lichtabsorbierenden Indexelektrodenstreifen (ID1, ID2), die auf der genannten Scheibe (4) abwechselnd zwischen benachbarten Leuchtstoffstreifen (R, G, B) angeordnet sind, so daß die ersten und die zweiten Indexelektrodenstreifen (ID1, ID2) an den entsprechenden Seiten jedes Leuchtstoffstreifens (R, G, B) von dem Elektronenstrahl (EB) gleichzeitig mit den Leuchtstoffstreifen (R, G, B) abgetastet werden,
sowie mit einer zusätzlichen Vertikal-Ablenkeinrichtung (24, 25), dadurch gekennzeichnet,
daß ein auf dem Leuchtstoffschirm (8) erzeugtes Bild von derjenigen Seite betrachtet wird, auf die der Elektronenstrahl (EB) auftrifft,
und daß mit Hilfe einer Verstärkerschaltung (26) mit einem Differenzverstärker (27) ein der Differenz zwischen einem ersten und einem zweiten, die Landeposition des Elektronenstrahls wiedergebenden, von den ersten und den zweiten Indexelektrodenstreifen (ID1, ID2) abgeleiteten Detektorsignal entsprechendes Differenzsignal abgeleitet wird, das der zusätzlichen Vertikal-Ablenkeinrichtung (24, 25) als Vertikal-Korrekturablenksignal zugeführt wird, so daß die Abtastspur des Elektronenstrahls (EB) relativ zu den Leuchtstoffstreifen (R, G, B) durch die zusätzliche Vertikal-Ablenkeinrichtung (24, 25) gesteuert wird.

## Revendication

Tube cathodique pour images en couleurs, à indexage de faisceau, comprenant:
un écran luminescent (8) formé sur un panneau (4) d'une enveloppe de tube (2) ledit écran luminescent (8) étant balayé par un seul faisceau d'électrons (EB) provenant d'un canon à électrons (10), et ledit écran luminescent (8) étant formé d'une pluralité de bandes de luminophore de couleurs (R, G, B) qui s'étendent dans une direction de balayage de ligne (Y) dudit faisceau d'électrons (EB) en étant agencées séquentiellement dans la direction (X) perpendiculaire à la direction de balayage de ligne (Y), et des premières et deuxièmes bandes-électrodes d'indexage (ID1, ID2), absorbant la lumière, formées sur ledit panneau (4), de manière à être alternativement agencées entre desdites bandes de luminophore (R, G, B) consécutives, la première et la deuxième bande-électrode d'indexage ID1, ID2) situées sur des côtés respectifs de chaque dite bande de luminophore (R, G, B) étant balayées par ledit faisceau électronique (EB), conjointement avec ladite bande de luminophore (R, G, B); et

des moyens auxilliaires de déviation verticale (24, 25); caractérisé en ce que:

une image formée sur ledit écran fluorescent (8) est vue du côté sur lequel ledit faisceau d'électrons (EB) arrive; et en ce que:

un signal de différence entre un premier et un deuxième signal de détection de position d'arrivée de faisceau électronique, dérivé desdites premières et deuxièmes électrodes d'indexage (ID1, ID2), est produit par un circuit amplificateur (26) comprenant un amplificateur différentiel (27) et est fourni auxdits moyens auxiliaires de déviation verticale (24, 25), en tant que signal de correction verticale de déviation, de sorte que le réglage exact du balayage dudit faisceau d'électrons (EB) par rapport auxdites bandes de luminophore (R, G, B) est commandé par lesdits moyens auxiliaires de déviation verticale (24, 25).

# FIG. 1

FIG. 2

EP 0 163 741 B1

## FIG. 3

## FIG. 4

FIG. 5A

42
41
40
4

FIG. 5B

41'
40
4

FIG. 5C

40'(a)
4

FIG. 5D

43    40'(a)
4

FIG. 5E

43'    40'(a)
4

*FIG. 5F*

43'  44  40'(a)

4

*FIG. 5G*

ID2  ID1

44'(b) 40'(a)  44'(b) 40'(a)

4

*FIG. 5H*

ID2  ID1  45

4

46

*FIG. 5I*

45'(R)  ID2  ID1

4

*FIG. 5J*

ID1  R  ID2  G  ID1  B2  8

4

5